# EUROPEAN PATENT SPECIFICATION

(11) **EP 3 630 434 B1**
(45) Date of publication and mention of the grant of the patent: **27.10.2021**
(21) Application number: 18737712.2
(22) Date of filing: 18.05.2018
(51) Int. Cl.: B28D 1/00, C04B 41/48

(54) **METHOD AND APPARATUS FOR CONSOLIDATING A SLAB OF NATURAL OR ARTIFICIAL STONE MATERIAL**
VERFAHREN UND VORRICHTUNG ZUR VERFESTIGUNG EINER PLATTE AUS NATUR- ODER KUNSTSTEINMATERIAL
MÉTHODE ET APPAREIL POUR LA CONSILIDATION DE DALLES EN MATÉRIAUX PIERREUX NATURELS OU ARTIFICIELS

(30) Priority: 23.05.2017 IT 201700056000
(43) Date of publication of application: 08.04.2020
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Marri, Luca
(86) International application number: PCT/IB2018/053517
(87) International publication number: WO 2018/215898

(56) References cited:
- EP-A1- 0 786 325
- EP-A1- 0 856 500
- EP-A2- 2 228 185
- WO-A1-2007/054995
- WO-A2-2006/048350
- IT-B- 1 056 388
- US-A1- 2008 206 466

## Description

The present invention relates to a method and an apparatus for consolidating slabs of natural or artificial stone material.

In particular, the present invention relates to a method and an apparatus for reinforcing slabs of natural or artificial stone material by means of impregnation with resins.

The slabs to which reference is made in the present description are slabs which are used for lining walls, floors, furnishing surfaces in general, etc.

In these slabs it is possible to define a surface which will remain visible during use and a surface which, owing to the presence of defects or more simply a less attractive appearance, will be the non-visible surface of the slab.

In the present description the term "visible surface" is understood as meaning the surface of the slab which, during use, is intended to remain visible, while "non-visible surface" is understood as meaning the surface of the slab which, during use, is intended to remain hidden.

As is known, one of the drawbacks during the processing of slabs of stone material is the presence of fracture lines inside the slabs, cavities or porous zones which start on the surface and extend towards the inside of the slab. These irregularities are unattractive and weaken the slab and, if not suitably treated, may result in breakage of the slab during movement or machining.

These irregularities are typical of natural stone and may be due both to the natural factors resulting in the formation of the stone and to the extraction operations; while, in composite stones these irregularities may for example be due to machining defects.

Many methods for consolidating and reinforcing the slabs which have defects of this type are known in the state of the art.

The known methods comprise essentially a step during which a resin, for example an epoxy or polyester resin, is distributed on one or both the surfaces of a slab, with the addition, where necessary, of gauze or granulated stone (also be of the same type as the stone forming the slab) inside the bigger cracks,

Then, the resin is hardened, preferably inside an oven, and, once the resin has hardened, the excess resin is eliminated.

Document EP 2 228 185 discloses a method for reinforcing a slab of natural or artificial stone material comprising the steps of a) sealing the non-visible surface of the slab and, where necessary, the surfaces of the edges; b) positioning the slab on a support surface, with, the visible surface directed upwards; d) distributing a resin (33) over the visible surface, in the zone bounded by the adhesive bead (19'); e) under vacuum conditions, then applying pressure, on the resin; f) restoring the atmospheric pressure; g) hardening the resin; and h) finish-machining the slab.

Document EP 2 228 185 A2 also discloses an apparatus for reinforcing a sheet of natural or artificial stone material, comprising means for forming an adhesive bead and means for distributing resin on top of a surface of a slab, and an impregnation station comprising a vacuum plant.

A method of this type is also described for example in IT 1293153 and IT 1350875.

There also exist other methods which are performed partly in vacuum conditions, in order to prevent air from remaining trapped inside the cracks or porous zones of the slab.

The most widely used resin-coating method, which is performed partly under a vacuum, comprises the following steps:
1) inserting the slab inside an air-tight chamber;
2) extracting the air in order to create the vacuum inside the chamber;
3) distributing a thermosetting liquid resin over the surface of the slab to be consolidated.
4) restoring the atmospheric pressure inside the chamber;
5) removing the slab from the chamber;
6) hardening the slab inside an oven by means of catalysis of the resin distributed over the surface.

Once the atmospheric pressure is restored and the slab leaves the chamber, the excess resin is preferably drawn off from the surface of the slab so as to leave a layer of resin just a few tens of a millimetre thick.

With this method it is known to consolidate both the visible surface and the opposite surface, i.e. non-visible surface.

Once the resin has completed the hardening step, the slab undergoes final finish-machining of at least the visible surface.

In given conditions, for example in the case of slabs with numerous fracture lines, it is known to provide a reinforcing element, for example a mesh or matting, on the non-visible surface.

This method, which is performed at atmospheric pressure, involves a step where, after distributing the resin over the non-visible surface of the slab, a reinforcing element is positioned, on the same surface. Reinforcing element and resin are then subjected to a pressing action performed by means of manual or automated rolling such that the resin is distributed uniformly and the reinforcing element adheres to the non-visible surface.

The prior art, although widely used and recognized, is not without drawbacks.

A first drawback relates to impregnation of the slab with resin. In fact, in the case of very small cracks or pores, the resin does not always manage to penetrate deeply, leaving zones without resin inside the slab. For this reason the treated slab may have a surface which is perfectly coated with resin, but the crack inside it could be without resin. In this case, the resistance of the slab to handling and machining, although greater, might not yet be satisfactory.

A second drawback relates to the recovery of the excess resin. The method is very complex and requires a device which is also complex and difficult to dean.

The object of the present invention is to overcome, at least partially, the drawbacks of the prior art.

A first task of the present invention is to provide a method and an associated apparatus in which the penetration of the resin inside the cracks, the cavities and the pores of the slabs is improved.

A second task of the present invention is to provide a method and an apparatus in which it is no longer necessary to draw off the excess resin from the slab.

The object and the tasks are achieved with a method according to claim 1 and with an apparatus according to claim 14.

Preferred embodiments are defined by the features of the dependent claims.

The advantages and the characteristic features of the present invention will emerge more clearly from the detailed description which follows of a number of examples of embodiment, provided by way of a non-limiting explanation, with reference to the attached drawings in which:
Fig. 1 shows in schematic form a front view of a part of the apparatus according to the present invention during a first working step;
Fig. 2 shows in schematic form a front view of the part of the apparatus according to Figure 1 during a second working step;
Fig. 3 shows in schematic form a front view of a part of the apparatus according to the present invention during which resin is distributed over a surface of a slab;
Fig. 3A shows an enlarged view of a detail of Fig. 3;
Fig. 4 shows in schematic form a part of the apparatus according to the present invention;
Fig. 5 shows in schematic form the part of the apparatus according to Figure 4 in a possible working configuration;
Fig. 5A shows an enlarged view of a detail of Fig. 5;
Fig. 6 shows in schematic form the part of the apparatus according to Figure 4 in a possible working configuration;
Fig. 7 shows in schematic form the part of the apparatus according to Figure 4 in a possible working configuration;
Fig. 8 shows in schematic form the part of the apparatus according to Figure 4 in a possible working configuration;
Fig. 8A shows an enlarged view of a detail of Fig. 8;
Fig. 9 shows in schematic form the part of the apparatus according to Figure 4 in a possible working configuration;
Fig. 9A shows an enlarged view of a detail of Fig. 9;
Fig. 9B shows an enlarged view of a detail of Fig. 9;
Fig. 10 shows in schematic form the part of the apparatus according to Figure 4 in a possible working configuration;
Fig. 11 shows in schematic form a part of the apparatus according to the present invention;
Fig. 11A shows an enlarged view of a detail of Fig. 11;

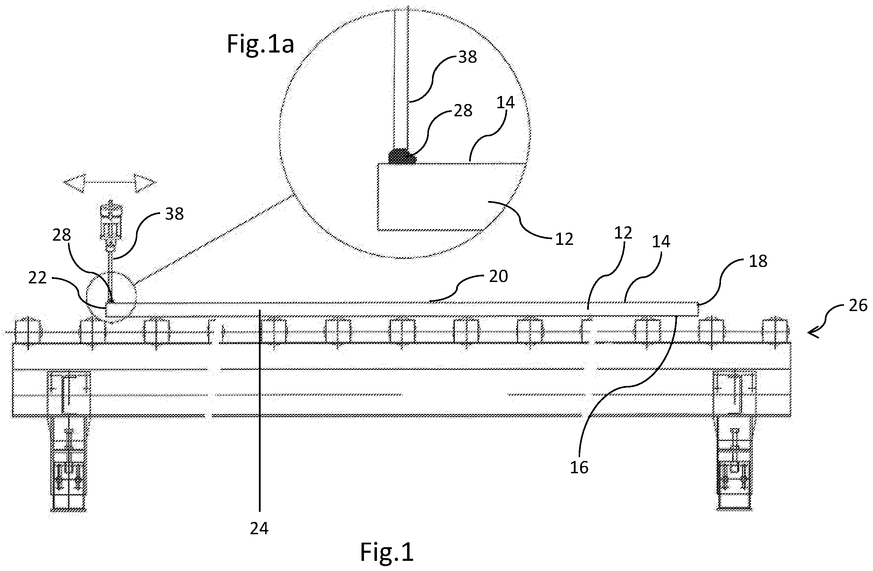

Figure 1 shows a slab of natural or artificial stone material, indicated generally by the reference number 12.

In the slab 12 the following may be identified:
- a visible surface 14;
- a non-visible surface 16;
- side edges 18, 20, 22, 24.

The method for consolidating the slab 12 of natural or artificial stone material comprises the following steps:
a) sealing the non-visible surface 16 of the slab and, where necessary, the surfaces of the edges 18, 20, 22, 24;
b) positioning the slab 12 on a support surface 26, with the visible surface 14 directed upwards;
c) providing a compressible adhesive bead 28 on the visible surface 14, in the vicinity of the perimetral edge of the slab 12;
d) distributing a resin 30 over the visible surface 14, in the zone bounded by the adhesive bead 28;
e) under vacuum conditions, arranging on top of the slab a sheet 32 of anti-adhesive material and then applying pressure on the bead and resin by means of a press ram 50;
f) restoring the atmospheric pressure;
g) hardening the resin 30; and
h) finish-machining the slab 12.

In the present description, the expression "sealing a surface" is understood as meaning sealing cracks, holes and porous zones so that the passage of fluid and in particular air across this surface is prevented.

In accordance with a possible embodiment of the present invention the step (a) of sealing the non-visible surface 16 of the slab 12 and optionally the surfaces of the edges 18, 20, 22, 24 comprises a step of preparing the non-visible surface.

The step of preparing the non-visible surface 16 of the slab 12 may comprise a step during which the slab is washed. Washing is performed preferably using a jet of water under high pressure (several tens of bars).

The washing step may be performed by means of nozzles connected to a circuit supplying pressurized water.

Then the non-visible surface 16 of the slab 12 undergoes drying, which may comprise a first drying step using fans, preferably hot-air fans, which may be positioned so as to act on the top surface of the slab, i.e. surface not making contact, but also on the surface of the slab resting on the support surface. For this purpose, the fans may be positioned also underneath the conveying line and therefore underneath the surface.

Moreover, the drying step may comprise a second drying step performed by means of at least one infrared-ray or hot air oven.

In accordance with a possible embodiment of the present invention, in a downstream station repair of any macro defects of the non-visible surface, such as macro cracks or macro cavities, which may also affect the entire thickness of the slab 12, is performed. This repair may be performed in a manual or automated manner.

Advantageously, the macro defects are sealed by means of resin (for example polyester resin) or a quick-setting viscous filler, reinforced where necessary with gauzes or granulated material. Then hardening - usually rapid - of the resin or filler must be allowed to take place. At this point sealing of any cracks or holes visible on the surface is performed by means of the application, using manual or automatic devices, of adhesive strips of sheets which are non-breathable to liquids and the air.

Moreover non-breathable sealing of any cracks on the side edges 18, 20, 22, 24 of the slab is performed using an adhesive strip or filler.

Very often the slab may appear to be cracked and "weak"; in this case it is possible to perform sealing of the non-visible surface by subjecting this surface to a reinforcing step using matting after the drying step, this achieving both reinforcing of the slab and sealing of the surface.

The mat reinforcing and impregnation step comprises a first step during which a metered amount of resin is uniformly distributed over the surface which is to be reinforced with matting (non-visible surface).

The apparatus may therefore comprise a station for detecting the shape and the dimensions of the slab 12 so that the resin may be distributed, depending on the actual shape and dimensions of the slab being processed, by resin distribution means. Detection may be performed for example by means of optical devices which are connected to a processing unit. The distribution means may be, for example, directable nozzles which are controlled depending on the information received from the processing unit.

In accordance with a possible embodiment of the present invention, the distribution means apply uniformly onto the non-visible surface 16 of the slab 12 a metered amount of resin, preferably polyurethane or epoxy resin.

By way of example, a quantity of resin equal to about 100-800 g/m² depending on the consistency of the matting, and preferably between 130 and 400 g/m², may be distributed over the surface.

A reinforcing element in the form of a fabric or mat is then deposited on the surface 16 on which the resin has been distributed so that the resin impregnates, at least partially, the reinforcing element.

In accordance with a possible embodiment of the present invention, the reinforcing element may have a gram weight of between 100 and 600 g/m² and preferably between 200 and 400 g/m².

Advantageously, for a reinforcing element with a gram weight of about 200 g/m² about 150-250 g/m² of resin may be needed.

In accordance with a possible embodiment of the present invention, joining together of the reinforcing element and slab may be performed manually.

The apparatus comprises a station for supplying the reinforcing element. The station may comprise first means for supporting a reel of reinforcing material in the form of a continuous strip, which are positioned above the line for conveying the flat supports with the slab 12.

The station may comprise means for gripping and pulling along the reinforcing element, designed to be displaced above the slab to be reinforced with matting. The gripping and pulling means may he for example of the pincer type.

The gripping and pulling means may be designed to be displaced above the slab and therefore pull the reinforcing element along and on top of the slab.

In the vicinity of the downstream end of the slab, automatic cutting means may be provided for cutting the strip of reinforcing material in the transverse direction. The automatic cutting means may be, for example, a cutter designed to move in the transverse direction.

In accordance with a possible embodiment of the present invention the automatic cutting means are operated depending on the shape of the slab which has been detected in the upstream detection station.

Once it has been pulled along and cut, the reinforcing element falls and rest on top of the layer of resin applied beforehand on the surface of the slab.

At this point this reinforcing element is impregnated, at least partially, preferably by means of a manual or automatic rolling action.

The slab thus reinforced with matting is then subjected to a hardening step.

Hardening of the resin by means of heating may be performed inside a hardening oven and may last about 2-80 minutes, depending on the nature of the resin used, at a temperature of between 40 and 90°C, thus achieving non-breathable sealing of any cracks or through-holes. Advantageously, hardening of the resin may occur at a temperature of about 80-100°C by means of contact application of a heated plate for a duration of about 2-5 minutes; alternatively it may be performed at a temperature of less than 60°C, and preferably between 40°C and 50°C, for a duration of about 80 minutes by means of heating with hot air. Downstream of the hardening station the slab is removed from the flat support and normally cooled at room temperature.

Once the step of sealing the non-visible surface 16 and the edges 18, 20, 22, 24 has been completed, the step of impregnating the visible surface 14 of the slab 12 is performed.

With reference to Figure 1, the slab is deposited on top of a support surface 26 so that the top side is the visible side 14. The support surface 26 may be for example a roller conveyor, as shown in Figure 1.

The visible side 14 may then be sized and/or smoothed if it is not perfectly flat. After the sizing and/or smoothing operation, the slab may undergo a washing step, for example using high-pressure water jets. The slab is then dried, for example in an oven at about 45-50°C for about 80 minutes so that the moisture due to the previous washing step is eliminated.

Then, if necessary, any larger cavities are consolidated by means, for example, of stone granules fixed using a quick-setting glue.

The adhesive bead 28 is then applied on the visible surface 14 in the vicinity of the perimetral edge of the slab. In accordance with a possible embodiment of the present invention, the adhesive bead 28 is applied manually by an operator using an extruder.

Alternatively, the adhesive bead 28 may be applied using automatic means, such as a robotic nozzle 38 (shown in Figures 1 and 1A).

In this connection, the apparatus may comprise a station (not shown) for detecting the shape of the slab 12, so that the adhesive bead 28 may be distributed depending on the actual shape and dimensions of the slab being processed, via the robotic nozzle 38. Detection may be performed for example by means of optical devices connected to a processing unit.

The adhesive bead 28 is formed using an adhesive material, such as a paste-like, hardenable, adhesive mastic. Advantageously, the height of the adhesive bead 28 is between 2 and 3 mm. The adhesive bead 28 therefore defines a sealing path (in the manner of a containing shoulder) situated close to the perimeter of the slab, so as to create a kind of tank or tray inside which the resin 30 may be deposited.

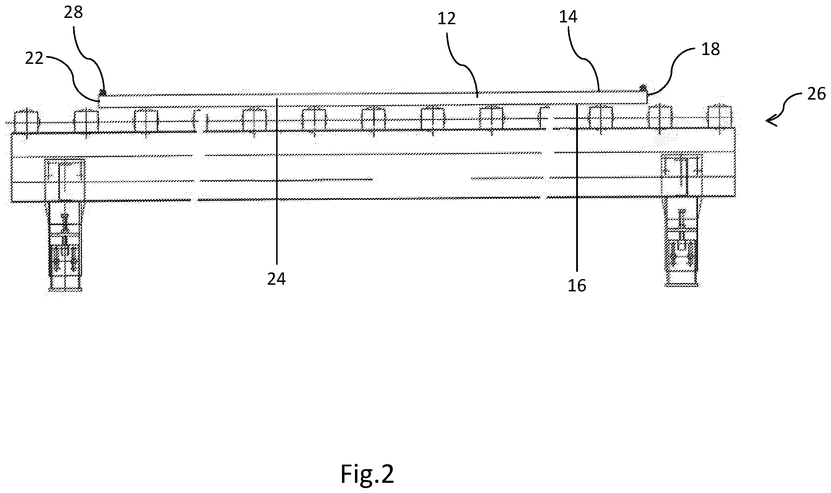

Figure 2 shows the slab 12 where the step of preparing the adhesive bead 28 has been completed.

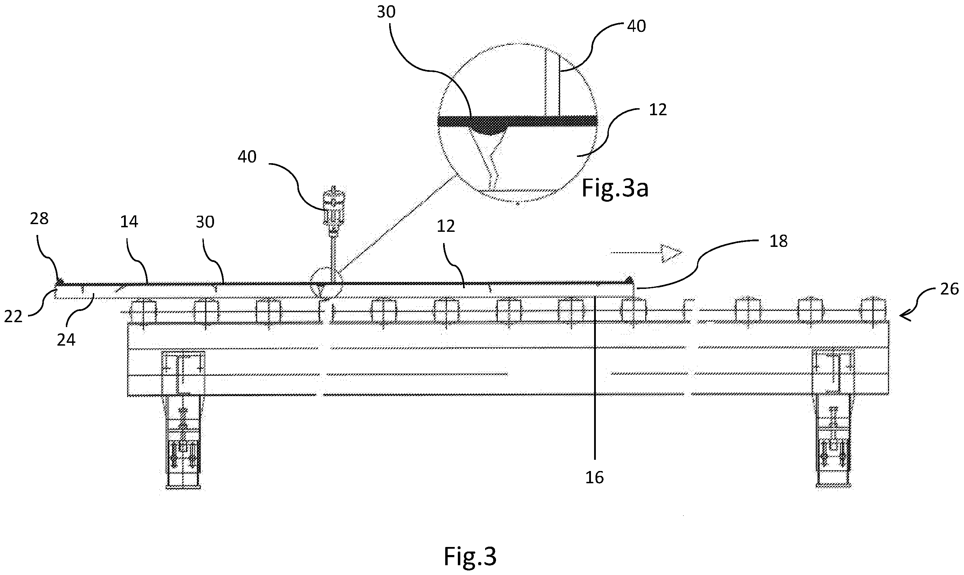

With reference to Figures 3 and 3A, step d), relating to distribution of the resin 30 over the visible surface 14 within the zone bounded by the adhesive bead 28, will be described below. According to a first embodiment of the present invention, a uniform layer of resin, which has been deaerated previously, is distributed inside the tray formed in the previous step and consisting of slab 12 and bead 28, said layer having a thickness of about 0.3 - 0.5 mm and therefore being in an amount equal to about 300-500 g/m³.

Advantageously, the resin may be an epoxy or polyester resin.

Distribution of the resin may be performed by means of at least one dispensing nozzle 40. In accordance with an alternative embodiment of the present invention, the resin 30 is distributed on the visible surface 14 of the slab 12 inside an environment where a vacuum having a given residual pressure value is formed.

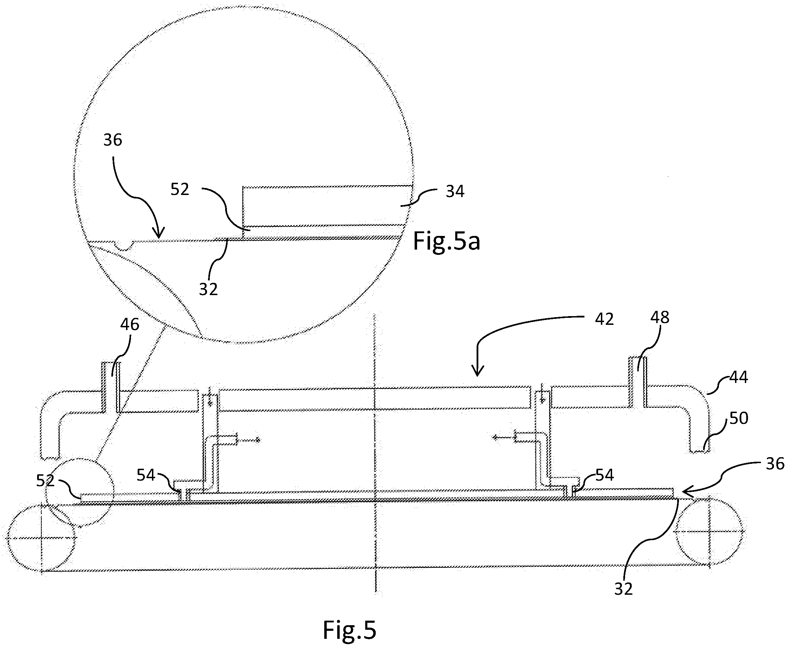

According to a possible embodiment of the present invention, the sheet 32 of anti-adhesive material to be positioned above the slab is prepared. The sheet 32 of anti-adhesive, preferably transparent, material is positioned inside an impregnation station 42 (see Fig. 5).

The sheet 32 may be made of polyethylene, polypropylene or PET, etc. The sheet 32 may have a gram weight of between 80 and 200 g/m².

The impregnation station 42 may comprise:
- a bell member 44, movable between a raised position which allows the passage of fluid between an internal zone thereof and the outside, as well as passage of the slabs 12 and the sheet 32; and a lowered position, in contact with the conveying surface 36, for example belt: conveyor, where fluid is unable to pass between an internal zone thereof and the outside, and vice versa;
- a vacuum plant, comprising suction ducts 46, 48 which connect the plant to the inside of the bell member 44; and
- a press ram 50 movable vertically with respect to the bell member, the pressing surface thereof being provided with a conformable element 52.

The conformable element 52 is made of soft and/or elastic material, such as foam rubber (preferably with a smooth surface).

Advantageously, the ram 50 extends so as to cover the surface of the slab.

Among other functions, the conformable element is also able to compensate for any small differences in evenness and parallel alignment of the ram and the surface of the slab. In fact, the dimensions of the slabs may also be considerable, of the order of 220×360 cm, so that the ram, since it must have larger dimensions, is of a notable size. Moreover, it is evident that, during the lowering operation, there may be points of the ram, in particular where greatly spaced from each other, which are not at the same height so that the conformable element also has the function of compensating for these height differences.

In accordance with a possible embodiment of the present invention, the press ram 50 is designed to engage with the sheet 32.

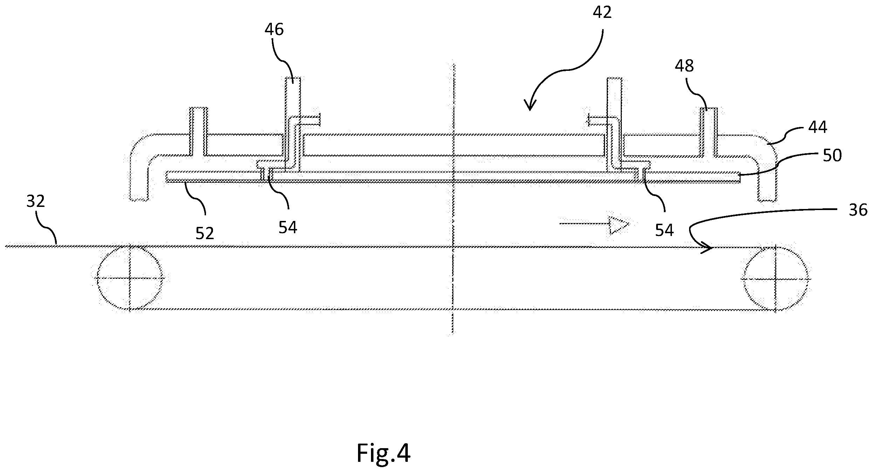

According to the embodiment shown in Figure 4, the sheet 32 is moved by the conveying surface 36 inside the impregnation station and in particular inside the bell member 44.

Then, the ram is lowered so that the conformable element or mattress 52 comes into contact with the sheet 32 for engagement therewith. In accordance with a possible embodiment of the present invention, the ram and the conformable element 52 may be provided with air flow vents 54 connected to a vacuum-generating plant, Advantageously, the conformable element 52 may be porous and therefore the negative pressure produced for engagement with the sheet 32 may be obtained directly by means of the porous surface.

In this way the sheet 32, owing to the negative pressure created, is retained by the ram, as shown in Figure 5.

Alternatively, the ram may be provided with mechanical engaging means, such as pincers, suitable for gripping the sheet 32 along its contour.

According to further embodiments of the present invention, the sheet 32 may be electrostatically charged or provided with a thin layer of adhesive so as to adhere autonomously to the smooth, bottom surface of the conformable element 52.

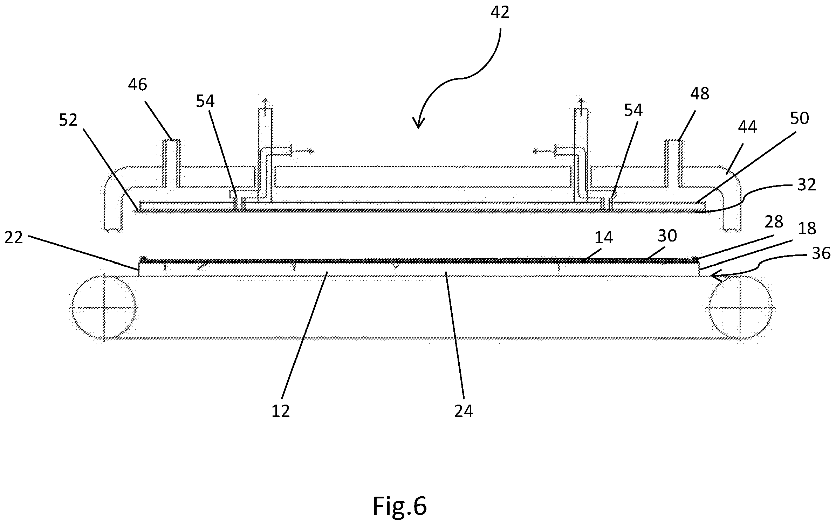

Thereafter, as shown in Figure 6, the ram 50 is raised together with the sheet 32 which adheres to the pressing surface of the conformable element 52, and the slab 12 together with the resin layer 30 enters into the impregnation station 42.

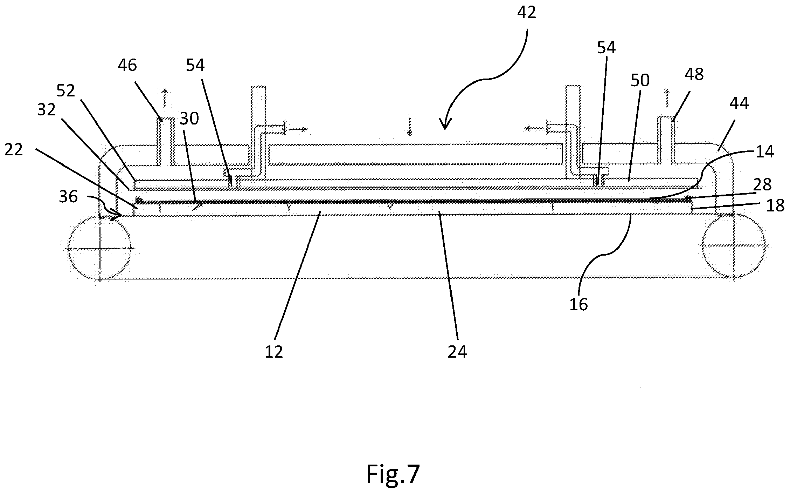

With reference to Figure 7, once the slab 12 reaches the position inside the impregnation station, the bell member is lowered and the means designed to generate the vacuum with a given residual pressure inside the bell member 44 are activated. Advantageously, the residual pressure may be less than or equal to about 35 mbar. The air present inside the cavities and cracks of the slab 12, which is at atmospheric pressure, increases its volume, perforating the thin layer of resin and, flowing out of the cavities, is sucked out by the vacuum plant.

With reference to the embodiment of the present invention, in which the resin is distributed under vacuum conditions, it is evident that air under atmospheric pressure is no longer present inside the cracks and therefore, during the aforementioned step, there will be no air flow between the cracks and the vacuum plant.

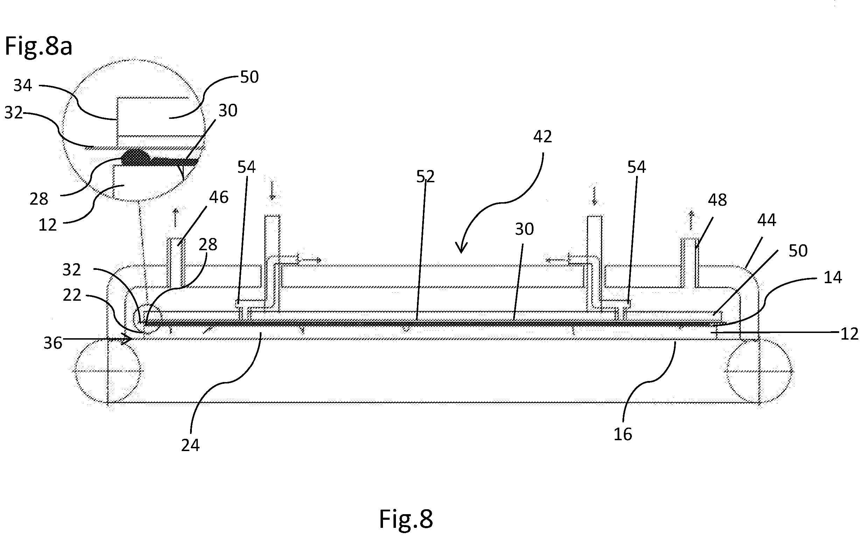

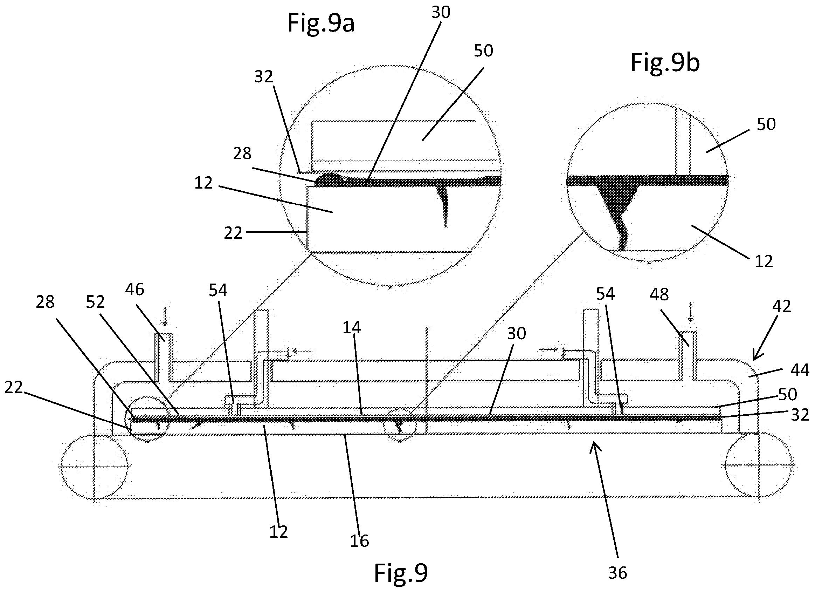

Once the bell member 44 has been lowered, the ram 50 is also lowered until the sheet 32 comes into contact with the adhesive bead 28 (Figures 8 and 8A). The conformable element 52 with the sheet 32 is pressed against the adhesive bead 28 which is compressed, and therefore the sheet 32 comes into contact with the resin 30 which is pressed over the whole surface and therefore made to penetrate inside the cavities and cracks (Figure 9, 9A, 9B), Then the bead is further compressed until it reaches a thickness similar to that of the adjacent layer of resin.

Since the bead 28 is adhesive, the sheet 32 is glued along the adhesive bead 28, therefore forming a so-called hermetically sealed pocket composed of the visible surface 14 of the slab 12, the adhesive bead 28 and die sheet 32.

Thereafter the atmospheric pressure inside the bell member is gradually restored. Consequently the sheet 32 exerts a thrusting force on the resin 30, which causes the resin 30 to be drawn inside all the holes and cracks present in the slab, owing to sealing of the opposite side. Adhesion of the sheet 32 against the bead 28 prevents any resin from coming out of the pocket.

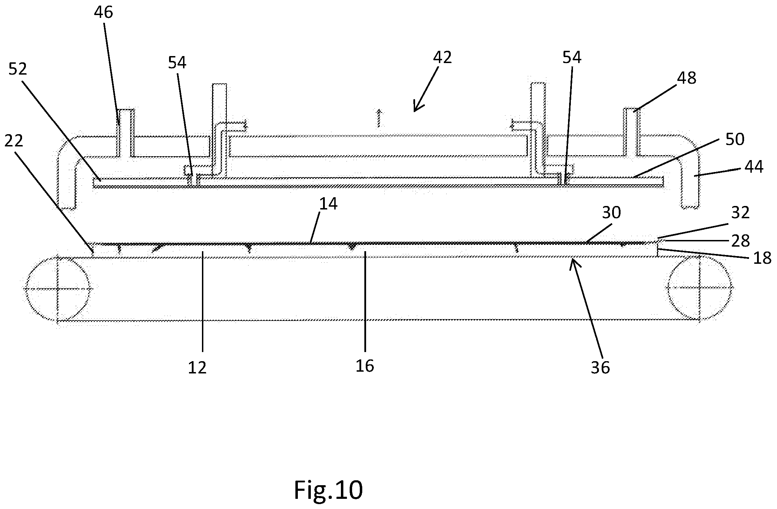

As shown in Figure 10, the ram 50 is then raised, after first deactivating any vacuum systems or mechanical systems for engaging the sheet 32. In this way the sheet remains in adhering contact with the bead 28 and the layer of resin 30. The bell member 44 together with the ram is then also raised.

In accordance with a possible embodiment of the present invention, after restoring atmospheric pressure inside the bell member, the pressure may be increased to a value greater than atmospheric pressure, so as to increase the pressure of the sheet 32 against the resin 30 and therefore the capacity for the resin 30 to penetrate inside the cracks of the slab. Thereafter, once atmospheric pressure has been restored and the bell member raised, the slab is extracted from the impregnation station.

It is evident that, owing to the thrust produced by atmospheric pressure, the sheet pressed firmly against the bead 28 by the atmospheric pressure compresses the resin, forcing it increasingly inside the impregnated cracks, without the risk of any voids, the bottom side being well sealed in a non-breathable manner and the bead ensuring a perfect perimetral seal. The surface of the plastic sheet 32 which, during use, is directed towards the slab may be smooth.

According to an alternative embodiment, a dense grid of projections with a thickness of about 0.2 - 0.4 mm, directed towards the surface of the slab, may be provided. In this way it is possible to favour a minimum thickness of the resin passage over the entire surface of the slab so as to obtain a uniform distribution of the resin underneath the sheet acted on by the atmospheric pressure.

Advantageously the projections may have a diameter of about 2 mm. Moreover they may be in the form of spherical caps. In accordance with a possible embodiment of the present invention they may be arranged about eight every cm².

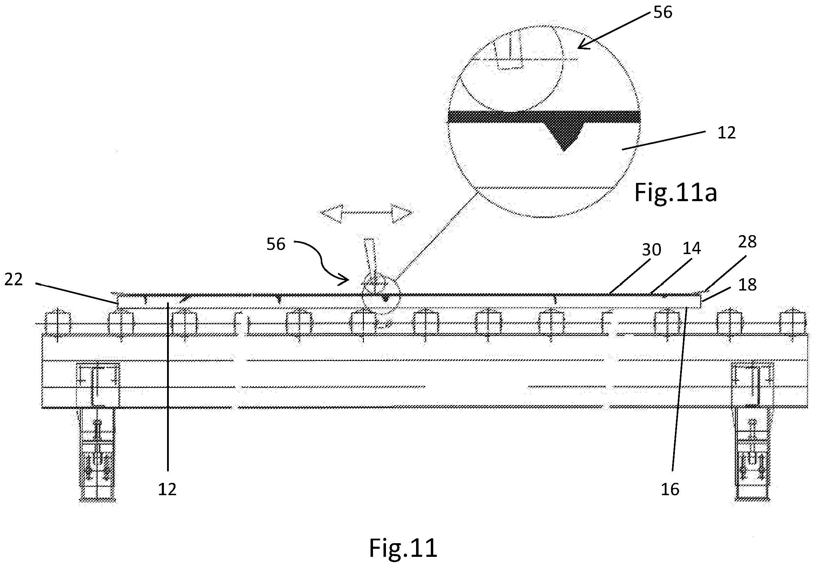

Advantageously manual rolling or rolling by means of a mechanical device may be then performed on the surface of the sheet 32. The rolling operation exerts a kind of massaging action on top of the sheet 32. Advantageously rolling may be performed by means of a mobile roller 56 (as shown in Figure 11).

In this way, the thrust exerted by the rolling massaging action on top of the sheet 32 allows the resin to be pushed from the zones with less porosity or cracks, where the resin could accumulate, to the zones with greater porosity or cracks, so as to obtain a uniform distribution thereof over the whole surface and ensure complete filling with resin of all the cavities, at the same time avoiding using an excessive amount of resin and thus limiting the costs of the operation.

Thereafter hardening of the resin is performed. For this purpose the slab 12 may be inserted inside an oven at a temperature of 50-60°C for a duration of about 80 minutes.

Once the resin has hardened, the sheet 32 is removed by means of a manual or automated peeling action, and smoothing and polishing of the visible surface is also performed. With this operation obviously the thin layer of superficial resin is removed.

The advantages compared to the methods and the apparatus of the prior art are therefore now evident.

Firstly less resin is wasted since, owing to the formation of the lateral seal with the bead 28 and owing to the manual or automatic rolling operation, the resin may be conveyed into the zones where it is most needed.

The apparatus is therefore less complex, since complicated systems for extraction of the resin are no longer necessary.

It is thus possible to obtain a process which is not overly complex and may be realized using an apparatus which is not too costly, ensuring optimum consolidation of the slabs with total vacuum impregnation of the cracks and porous zones using resin,

The person skilled in the art, in order to satisfy specific needs, may make modifications to the embodiments described above and/or replace the element described with equivalent elements within the scope of the attached claims.

## Claims

1. Method for reinforcing a slab of natural or artificial stone material comprising the steps of:
a) sealing the non-visible surface (16) of the slab and, where necessary, the surfaces of the edges (18, 20, 22, 24);
b) positioning the slab (12) on a support surface (26), with the visible surface (14) directed upwards;
c) providing an adhesive bead (28) on the visible surface (14), in the vicinity of the perimetral edge of the slab (12);
d) distributing a resin (30) over the visible surface (14), in the zone bounded by the adhesive bead (28);
e) under vacuum conditions, arranging on top of the slab a sheet (32) of anti-adhesive material and then applying pressure, on the resin by means of a press ram (50);
f) restoring the atmospheric pressure;
g) hardening the resin (30); and
h) finish-machining the slab (12).

2. Method according to claim 1, **characterized in that**, after the step (f), a rolling step is performed, manually or by means of a mechanical device, on top of the sheet (32), for example by means of a mobile roller (56).

3. Method according to claim 1 or 2, **characterized in that** the visible surface (14) is subjected to a step where any large cavities and/or defects are consolidated, using stones granules embedded in a quick-setting adhesive or using a filler.

4. Method according to any one of the preceding claims, **characterized in that** the adhesive bead (28) is formed by means of a robotic nozzle (38).

5. Method according to the preceding claim, **characterized in that** the shape of the slab is detected in a detection station so that the adhesive bead (28) may be distributed depending on the actual shape and dimensions of the slab being processed.

6. Method according to any one of the preceding claims, **characterized in that** the adhesive bead (28) is a paste-like, hardenable, adhesive mastic.

7. Method according to any one of the preceding claims, **characterized in that** the height of the adhesive bead (28) is between 2 and 3 mm.

8. Method according to any one of the preceding claims, **characterized in that** the resin (30) is an epoxy or polyester resin.

9. Method according to any one of the preceding claims, **characterized in that** the sheet (32) of anti-adhesive material is made of polyethylene, polypropylene or PET.

10. Method according to any one of the preceding claims, **characterized in that** the sheet (32) of anti-adhesive material is provided with a dense grid of projections having a thickness of 0.2 - 0.4 mm directed towards the surface of the slab.

11. Method according to any one of the preceding claims, **characterized in that** the step e) is performed in an impregnation station (42) comprising:
- a bell member (44), movable between a raised position which allows the passage of fluid between an internal zone thereof and the outside, and a lowered position, in contact with a conveying surface (36), where fluid is unable to pass between an internal zone thereof and the outside, and vice versa;
- a vacuum plant, comprising suction ducts (46, 48) which connect the plant to the inside of the bell member (44); and
- a press ram (50) movable vertically with respect to the bell member, the pressing surface thereof being provided with a conformable element (52).

12. Method according to the preceding claim, **characterized in that** the conformable element (52) is made of soft and/or elastic material.

13. Method according to the preceding claim, **characterized in that** the ram (50) and the conformable element (52) are provided with air flow vents (54) connected to a vacuum plant.

14. Method according to claim 11, **characterized in that**, during the step e), the conformable element (52) with the sheet (32) is pressed against the adhesive bead (28) which is compressed, and consequently the sheet (32) comes into contact with the resin (30) which is pressed over the entire surface and therefore made to penetrate inside the cavities and cracks.

15. Method according to claim 11, **characterized in that**, between step e) and step f), there is a step where the pressure is increased inside the bell member (44) to a value higher than atmospheric pressure, so as to increase the force pressing the sheet (32) towards the resin. (30).

16. Method according to any one of the preceding claims, **characterized in that** the step d) is performed under vacuum conditions.

17. Apparatus for reinforcing a sheet of natural or artificial stone material, comprising means (38) for forming an adhesive bead (28) and means (40) for distributing resin on top of a surface of a slab (12), and an impregnation station (42) comprising:
- a bell member (44), movable between a raised position which allows the passage of fluid between an internal zone thereof and the outside, and a lowered position, in contact with a conveying surface (36), where fluid is unable to pass between an internal zone thereof and the outside, and vice versa;
- a vacuum plant, comprising suction ducts (46, 48) which connect the plant to the inside of the bell member (44); and
- a press ram (50) movable vertically with respect to the bell member, the pressing surface thereof being provided with a conformable element (52) designed to grasp an anti-adhesive sheet.

18. Apparatus according to the preceding claim, **characterized in that** the conformable element (52) is made of a soft and/or elastic material.

19. Apparatus according to the preceding claim, **characterized in that** the ram (50) and the conformable element (52) are provided with air flow vents (54) connected to a vacuum plant.

20. Apparatus according to claim 18, **characterized in that** the ram (50) is provided with mechanical devices for grasping a sheet.

## Patentansprüche

1. Verfahren zum Verstärken einer Platte aus natürlichem oder künstlichem Gesteinsmaterial, aufweisend die Schritte eines:
a) Abdichtens der nicht sichtbaren Fläche (16) der Platte und, wo erforderlich, der Flächen der Kanten (18, 20, 22, 24);
b) Positionierens der Platte (12) mit der sichtbaren Fläche (14) nach oben gerichtet auf einer Trägerfläche (26);
c) Bereitstellens einer adhäsiven Wulst (28) in der Nähe der Umfangskante der Platte (12) auf der sichtbaren Fläche (14);
d) Verteilens eines Harzes (30) über die sichtbare Fläche (14) in dem durch die adhäsive Wulst (28) begrenzten Bereich;
e) Anordnens einer Folie (32) aus einem anti-adhäsiven Material auf der Oberseite der Platte und dann eines Aufbringens eines Drucks auf das Harz mittels eines Pressenstößels (50) unter Vakuumbedingungen;
f) Wiederherstellens des Umgebungsdrucks;
g) Aushärtens des Harzes (30); und
h) Fertigbearbeitens der Platte (12).

2. Verfahren gemäß Anspruch 1, **dadurch gekennzeichnet, dass** nach dem Schritt (f) ein Walzschritt auf der Oberseite der Folie (32) manuell oder mittels einer mechanischen Vorrichtung, beispielsweise mittels einer mobilen Walze (56), ausgeführt wird.

3. Verfahren gemäß Anspruch 1 oder 2, **dadurch gekennzeichnet, dass** die sichtbare Fläche (14) einem Schritt unterzogen wird, in dem jegliche große Vertiefungen und/oder Fehlstellen unter Verwendung eines in einem schnellbindenden Klebstoffs eingebetteten Steingranulats oder unter Verwendung eines Füllstoffs verfestigt werden.

4. Verfahren gemäß einem der vorangehenden Ansprüche, **dadurch gekennzeichnet, dass** die adhäsive Wulst (28) mittels einer Roboterdüse (38) gebildet wird.

5. Verfahren gemäß dem vorangehenden Anspruch, **dadurch gekennzeichnet, dass** die Form der Platte in einer Erfassungsstation erfasst wird, so dass die adhäsive Wulst (28) in Abhängigkeit von der tatsächlichen Form und Abmessungen der verarbeiteten Platte ausgeteilt werden kann.

6. Verfahren gemäß einem der vorangehenden Ansprüche, **dadurch gekennzeichnet, dass** die adhäsive Wulst (28) ein pastenartiges, härtbares, adhäsives Mastixharz ist.

7. Verfahren gemäß einem der vorangehenden Ansprüche, **dadurch gekennzeichnet, dass** die Höhe der adhäsiven Wulst (28) zwischen 2 und 3 mm liegt.

8. Verfahren gemäß einem der vorangehenden Ansprüche, **dadurch gekennzeichnet, dass** das Harz (30) ein Epoxid- oder Polyesterharz ist.

9. Verfahren gemäß einem der vorangehenden Ansprüche, **dadurch gekennzeichnet, dass** die Folie (32) aus anti-adhäsiven Material aus Polyethylen, Polypropylen oder PET hergestellt ist.

10. Verfahren gemäß einem der vorangehenden Ansprüche, **dadurch gekennzeichnet, dass** die Folie (32) aus anti-adhäsivem Material mit einem dichten Netz von Vorsprüngen versehen ist, die eine zu der Fläche der Platte gerichtete Dicke von 0,2 - 0,4 mm haben.

11. Verfahren gemäß einem der vorangehenden Ansprüche, **dadurch gekennzeichnet, dass** der Schritt e) in einer Imprägnierstation (42) ausgeführt wird, die aufweist:
- ein Glockenelement (44), das zwischen einer angehobenen Position, die den Durchgang eines Fluids zwischen einem inneren Bereich davon und dem Äußeren ermöglicht, und einer eine Förderfläche (36) berührenden abgesenkten Position, in der es einem Fluid nicht möglich ist, zwischen einem inneren Bereich davon und dem Äußeren und umgekehrt durchzugehen, bewegbar ist;
- eine Vakuumanlage, die Ansaugkanäle (46, 48) aufweist, die die Anlage mit dem Inneren des Glockenelements (44) verbinden; und
- einen Pressenstößel (50), der bezüglich des Glockenelements vertikal beweglich ist, wobei die Pressoberfläche davon mit einem anpassungsfähigen Element (52) versehen ist.

12. Verfahren gemäß dem vorangehenden Anspruch, **dadurch gekennzeichnet, dass** das anpassungsfähige Element (52) aus einem weichen und/oder elastischem Material hergestellt ist.

13. Verfahren gemäß dem vorangehenden Anspruch, **dadurch gekennzeichnet, dass** der Stößel (50) und das anpassungsfähige Element (52) mit Luftströmungsöffnungen (54), die mit einer Vakuumanlage verbunden sind, versehen sind.

14. Verfahren gemäß Anspruch 11, **dadurch gekennzeichnet, dass** das anpassungsfähige Element (52) mit der Folie (32) während des Schritts e) gegen die adhäsive Wulst (28), die zusammengedrückt wird, gepresst wird, und folglicherweise die Folie (32) mit dem Harz (30), das über die gesamte Fläche gepresst wird und daher veranlasst wird, in die Vertiefungen und Risse einzudringen, in Kontakt kommt.

15. Verfahren gemäß Anspruch 11, **dadurch gekennzeichnet, dass** es zwischen Schritt e) und Schritt f) einen Schritt gibt, in dem der Druck innerhalb des Glockenelements (44) auf einen Wert erhöht wird, der höher als der Umgebungsdruck ist, um so die Kraft, die die Folie (32) zu dem Harz (30) hin drückt, zu erhöhen.

16. Verfahren gemäß einem der vorangehenden Ansprüche, **dadurch gekennzeichnet, dass** der Schritt d) unter Vakuumbedingungen ausgeführt wird.

17. Vorrichtung zum Verstärken einer Platte aus natürlichem oder künstlichem Gesteinsmaterial, die Mittel (38) zum Bilden einer adhäsiven Wulst (28) und Mittel (40) zum Verteilen von Harz auf einer Oberseite einer Fläche einer Platte (12), und eine Imprägnierstation (42) aufweist, die aufweist:
- ein Glockenelement (44), das zwischen einer angehobenen Position, die den Durchgang eines Fluids zwischen einem inneren Bereich davon und dem Äußeren ermöglicht, und einer eine Förderfläche (36) berührenden abgesenkten Position, in der es einem Fluid nicht möglich ist, zwischen einem inneren Bereich davon und dem Äußeren und umgekehrt durchzugehen, bewegbar ist;
- eine Vakuumanlage, die Ansaugkanäle (46, 48) aufweist, die die Anlage mit dem Inneren des Glockenelements (44) verbinden; und
- einen Pressenstößel (50), der bezüglich des Glockenelements vertikal beweglich ist, wobei die Pressoberfläche davon mit einem anpassungsfähigen Element (52) versehen ist, das gestaltet ist, eine anti-adhäsive Folie zu erfassen.

18. Vorrichtung gemäß dem vorangehenden Anspruch, **dadurch gekennzeichnet, dass** das anpassungsfähige Element (52) aus einem weichen und/oder elastischen Material hergestellt ist.

19. Vorrichtung gemäß dem vorangehenden Anspruch, **dadurch gekennzeichnet, dass** der Stößel (50) und das anpassungsfähige Element (52) mit Luftströmungsöffnungen (54) versehen sind, die mit einer Vakuumanlage verbunden sind.

20. Vorrichtung gemäß Anspruch 18, **dadurch gekennzeichnet, dass** der Stößel (50) mit mechanischen Einrichtungen zum Erfassen einer Folie versehen ist.

## Revendications

1. Procédé de renforcement d'une dalle de matériau en pierre naturelle ou artificielle comprenant les étapes consistant à :
a) étanchéiser la surface non visible (16) de la dalle et, si nécessaire, les surfaces des bords (18, 20, 22, 24) ;
b) positionner la dalle (12) sur une surface de support (26), avec la surface visible (14) orientée vers le haut ;
c) prévoir une bille adhésive (28) sur la surface visible (14), à proximité du bord périmétrique de la dalle (12) ;
d) distribuer une résine (30) sur la surface visible (14), dans la zone délimitée par la bille adhésive (28) ;
e) dans des conditions de vide, disposer, sur le dessus de la dalle, une couche (32) de matériau antiadhésif puis appliquer une pression sur la résine à l'aide d'une presse à vérin (50) ;
f) rétablir la pression atmosphérique ;
g) durcir la résine (30) ; et
h) finir la résine par usinage (12).

2. Procédé selon la revendication 1, **caractérisé en ce que**, après l'étape (f), une étape de roulage est exécutée, manuellement ou à l'aide d'un dispositif mécanique, sur la partie supérieure de la couche (32), comme à l'aide d'un rouleau mobile (56).

3. Procédé selon la revendication 1 ou 2, **caractérisé en ce que** la surface visible (14) est soumise à une étape lors de laquelle les cavités et/ou défauts de grande taille sont consolidé(e)s, à l'aide de granulés de pierre intégrés à un adhésif à prise rapide ou d'un mastic.

4. Procédé selon l'une quelconque des revendications précédentes, **caractérisé en ce que** la bille adhésive (28) est formée à l'aide d'une buse robotisée (38).

5. Procédé selon la revendication précédente, **caractérisé en ce que** la forme de la dalle est détectée dans un poste de détection de sorte que la bille adhésive (28) puisse être distribuée selon la forme et les dimensions réelles de la dalle traitée.

6. Procédé selon l'une quelconque des revendications précédentes, **caractérisé en ce que** la bille adhésive (28) est un mastic adhésif sous forme de pâte et durcissant.

7. Procédé selon l'une quelconque des revendications précédentes, **caractérisé en ce que** la hauteur de la bille adhésive (28) est comprise entre 2 et 3 mm.

8. Procédé selon l'une quelconque des revendications précédentes, **caractérisé en ce que** la résine (30) est une résine d'époxy ou de polyester.

9. Procédé selon l'une quelconque des revendications précédentes, **caractérisé en ce que** la couche (32) de matériau antiadhésif est composée de polyéthylène, polypropylène ou PET.

10. Procédé selon l'une quelconque des revendications précédentes, **caractérisé en ce que** la couche (32) de matériau antiadhésif est munie d'un réseau dense de saillies qui possèdent une épaisseur de 0,2 à 0,4 mm orientées vers la surface de la dalle.

11. Procédé selon l'une quelconque des revendications précédentes, **caractérisé en ce que** l'étape e) est exécutée dans un poste d'imprégnation (42) comprenant :
- un manchon (44), mobile entre une position surélevée qui permet le passage de fluide entre une zone interne de celui-ci et l'extérieur, et une position abaissée, en contact avec une surface d'acheminement (36), dans laquelle le fluide ne peut pas passer entre une zone interne de celui-ci et l'extérieur, et inversement ;
- une unité de vide, comprenant des conduits d'aspiration (46, 48) qui relient l'unité à l'intérieur du manchon (44) ; et
- un vérin de presse (50) mobile à la verticale par rapport au manchon, la surface de pression de celui-ci étant munie d'un élément conformable (52).

12. Procédé selon la revendication précédente, **caractérisé en ce que** l'élément conformable (52) est composé d'un matériau souple et/ou élastique.

13. Procédé selon la revendication précédente, **caractérisé en ce que** le vérin (50) et l'élément conformable (52) sont munis d'évents (54) reliés à une unité de vide.

14. Procédé selon la revendication 11, **caractérisé en ce que**, pendant l'étape e), l'élément conformable (52) avec la couche (32) est appuyé contre la bille adhésive (28) qui est comprimée, et, ensuite, la couche (32) entre en contact avec la résine (30) qui est appuyée sur la surface entière et, ainsi, pénètre à l'intérieur des cavités et fissures.

15. Procédé selon la revendication 11, **caractérisé en ce que**, entre l'étape e) et l'étape f) se trouve une étape lors de laquelle la pression est augmentée à l'intérieur du manchon (44) jusqu'à une valeur supérieure à la pression atmosphérique, de façon à augmenter la force qui appuie la couche (32) vers la résine (30).

16. Procédé selon l'une quelconque des revendications précédentes, **caractérisé en ce que** l'étape d) est exécutée dans des conditions de vide.

17. Appareil de renforcement d'une couche de matériau de pierre naturelle ou artificielle, comprenant un moyen (38) destiné à former une bille adhésive (28) et un moyen (40) destiné à distribuer de la résine sur le dessus d'une surface d'une dalle (12), et un poste d'imprégnation (42) comprenant :
- un manchon (44), mobile entre une position surélevée qui permet le passage de fluide entre une zone interne de celui-ci et l'extérieur, et une position abaissée, en contact avec une surface d'acheminement (36), dans laquelle le fluide ne peut pas passer entre une zone interne de celui-ci et l'extérieur, et inversement ;
- une unité de vide, comprenant des conduits d'aspiration (46, 48) qui relient l'unité à l'intérieur du manchon (44) ; et
- un vérin de presse (50) mobile à la verticale par rapport au manchon, la surface de pression de celui-ci étant munie d'un élément conformable (52) conçu pour saisir une couche antiadhésive.

18. Appareil selon la revendication précédente, **caractérisé en ce que** l'élément conformable (52) est composé d'un matériau souple et/ou élastique.

19. Appareil selon la revendication précédente, **caractérisé en ce que** le vérin (50) et l'élément conformable (52) sont munis d'évents (54) reliés à une unité de vide.

20. Appareil selon la revendication 18, **caractérisé en ce que** le vérin (50) est muni de dispositifs mécaniques destinés à saisir une couche.
